# EUROPEAN PATENT APPLICATION

(11) **EP 2 373 075 A1**
(43) Date of publication of application: **05.10.2011**
(21) Application number: 10250656.5
(22) Date of filing: 30.03.2010
(51) Int. Cl.: H04W 12/02, H04L 29/06

(54) **System and method for WLAN traffic monitoring**

(71) Applicant: British Telecommunications public limited company, London EC1A 7AJ (GB)
(72) Inventor: The designation of the inventor has not yet been filed
(74) Representative: Brinck, Coreena Fiona Anne

(57) **Abstract**

A monitoring system is arranged to enable monitoring of traffic in a communications system, the traffic originating from a plurality of devices roaming in a plurality of wireless local area networks. The system receives signalling traffic from a plurality of secure tunnels, each tunnel associated with a wireless network access point, duplicates one or more characteristics of the received signalling traffic to form a pair of duplicated versions of said received traffic, and forwards a duplicated version to a monitoring means. The monitoring means processes the received signalling traffic to determine from one or more characteristics of the received signalling traffic information enabling the identification of the device and the location of the wireless network access point. The signalling traffic is generated by a roaming device which has associated with one or more of said wireless local area networks. The monitored signalling traffic includes traffic generated before the device or its user has been authenticated and may include traffic generated during the assignment of an IP address. The device does not have to generate a request to use of the roaming service to trigger the monitoring of its signalling traffic.

## Description

The present invention relates to a system for wireless local area network traffic monitoring and to related aspects.

Some wireless local area network access points, for example, the network access point device marketed by British Telecommunications plc as the HomeHub™, are arranged to support networks with different Service Set IDentifers (SSIDs). This enables traffic separation between guest users' devices located within the area of the wireless network connectivity offered by the access point to the Internet and a service subscriber's devices also using the access point to access the Internet.

One benefit of sharing the wireless network coverage in this way to the service provider is that a wide area network is created without the installation costs and associated maintenance costs being the responsibility of the service provider. The configuration of the access points to provide such shared access with guest users is encouraged as the service subscriber for any particular internet service using the access point is then able to participate in the scheme and so also benefit from the roaming service that the shared access rights support.

Unsolicited use of a registered user's wireless local area network (WLAN) has several implications. For example, the level of guest traffic should not prevent the service subscriber from having access to the internet which meets certain service level conditions and use of the roaming service may need to be monitored, for example, to support only authenticated users from enjoying the roaming rights, and also to monitor the type of use being made of such networks by guest users.

Distinguishing the use of the access point by a device registered to a service subscriber associated with that access point and the use made of the network the access point provides for guest users is particularly important for monitoring malicious, abusive, illegal or antisocial purposes, including for example, usage of interest from a security perspective. The traffic separation schemes are known in the art which distinguish the use of the access point by ensuring the subscriber's use of the access point is associated with a separate network SSID from the SSID of the wireless LAN the access point provides for ad hoc use by guests.

For example, WO2009/022052 entitled "Network Access for a Visiting User" describes how a visitor's device can request a network address (for example, an IP address) using a suitable protocol (e.g. the Dynamic Host Configuration Protocol) from an access point which issues an IP address to the vistor's device. When the terminal attempts to communicate with the internet (e.g. tries to open a connection to a WWW service) the base station opens a VPN tunnel automatically from the user's point of view, whereby all of the visitor's traffic is automatically routed through a VPN hub to a captive portal. The captive portal intercepts all transmitted packets and redirects the connection through to a login page (i.e., the captive portal opens a login page on the visitor's device) and does not allow the customer's traffic to propagate further before login.

US2007/0268914 entitled "Tenant Network Controller Apparatus and Method" describes a LAN controller which can associate a MAC address with a geographic location.

US2008/0200148 entitled "Method and System for Providing Network Access and Services using Access Codes" describes an authorization and access control system for a venue or a geographic region comprising a plurality of venues.

EP 1850 532 entitled "Method of providing a guest terminal with emergency access over a WLAN" describes providing an emergency SSID can be provided to allow access to a LAN in an emergency.

US7,630,401 entitled "Bandwidth Management in a Network" describes how the transmission rate of a network device can be adjusted based on the network bandwidth utilisation.

US2008/0117836 entitled "Methods and apparatus to manage bandwidth in a wireless network" describes a wireless network access point supports both a private SSID and a public SSID which has a policy interface which enables the setting of a permissible public bandwidth on the public SSID and a bandwidth allocator to control usage of the permissible public bandwidth.

US2009/0129386 entitled "Operator Shop Selection" describes how an access node for an Ethernet network is connected between an access point for user devices and a Broadband Remote Access Server (BRAS) for access to a plurality of service providing networks which includes a Virtual Local Area Network (VLAN) handling unit.

US2009/0201946 entitled "Dynamic DSL Line Bandwidth Management with the Subscriber's Consent" describes how bandwidth can be borrowed from non-critical subscriber services to meet the increased bandwidth of other subscriber services.

US2008/0008140 entitled "Conditional Utilization of Private Short-Range Wireless Networks for Service Provision and Mobility" describes how a private short-range network can be integrated into a service/mobility domain.

US2008/0144588 entitled "Method and Apparatus of Prioritizing Services of Wireless Local Area Network" describes how an access point which may send a beacon with two SSIDs, one for guests and one for the subscriber, and how the traffic associated with each SSID can be assigned differing priorities.

Monitoring the traffic generated by a particular device or user is additionally challenging as any traffic interception has to conform to strict legal criteria in addition to the technical constraints the system infrastructure imposes.

WO2009/103340 entitled "Data Retention and Lawful Intercept for IP Services" describes how a law enforcement agency can be provided with retention or interception data for a target user and how location identification functionalities can be provided by enabling an intercepted/retained source/destination IP address to be linked to a communications identity number.

The above prior art is limited however, in that it relates to a guest user attempting to access the internet using a particular access point. If a guest user does not attempt to actually use the connection provided by the guest network, then no data can be collected and recorded.

Moreover, to operate within the constraints applied by various legal jurisdictions, some known interception systems require a user of a specifically targeted device to have logged in and been authenticated in order to track their traffic in a manner distinguished from the traffic of other parties. In such systems, until the targeted user can be uniquely identified, the network architecture is configured to prevent any traffic from an unauthorised user from propagating further within the network. Once the user has been identified through the authentication process for a particular device, traffic originating form that device can be intercepted and monitored by providing the details of that user and/or the device to the service provider and intercepting traffic at the service provider's access node.

### SUMMARY STATEMENTS OF INVENTION

The aspects and preferred embodiments of the invention are as set out below and in the accompanying claims, which may be combined in any appropriate manner apparent to one of ordinary skill in the art.

A first aspect of the present invention seeks to provide a method of monitoring traffic in a communications system, the traffic originating from a plurality of devices roaming in a plurality of wireless local area networks, the method including:
receiving signalling traffic from a plurality of secure tunnels, each tunnel associated with a wireless network access point;
duplicating one or more characteristics of the received signalling traffic to form a pair of duplicated versions of said received traffic;
forwarding a duplicated version of the signalling traffic to a monitoring point;
processing the forwarded duplicated version of the signalling traffic at the monitoring point to determine from one or more characteristics of the received duplicated version of the signalling traffic information enabling the identification of the device and the location of the wireless network,
wherein said signalling traffic is generated by a roaming device which has associated with one or more of said wireless local area networks.

The roaming service may enable the device to have connectivity within an intranet, the internet, and/or to use a portal application.

The signalling traffic may include traffic generated in response to said roaming device requesting an address in a said wireless local area network.

The communications system may further include an address server arranged to allocate an address to a roaming device.

The signalling traffic may comprise a request for an IP address generated by the device which the wireless access point relays to the address server.

The communications system may further include an authentication server arranged to inhibit the assignment of an address to a roaming device by a wireless access point until the roaming device is authenticated at the authentication server.

The signalling traffic may comprise authentication information.

The signalling traffic may include a private address allocated for the device by the wireless access point. The allocated private address may not be assigned to the device by the wireless access point until the device has been authenticated by the authentication server.

The signalling traffic which includes said allocated private address may comprise an XML message.

The signalling traffic which includes said allocated private address may comprise a message generated by said wireless access point which includes the private address allocated to the device as the source address for the message. The authentication server may be configured to process said message to determine from the network translated address of the message, the private address for which authentication is being performed which otherwise originates from the device.

The signalling traffic may comprise network discovery traffic generated by the device which is forwarded by the wireless access point.

One of said characteristics may comprise a device identifier for the roaming device. The device identifier may comprise a media access control source address.

One of said characteristics may comprise an IP address for the roaming device.

One of said characteristics may comprise a private IP address for the roaming device.

One of said characteristics may comprise an IP address for a wireless access point.

One of said characteristics may comprise an IP address locally generated by a wireless access point for the device.

Any one or more of said address characteristics may comprise an address translated in the network, for example, by NAT translation.

One of the characteristics may comprise a user identifier. A user identifer may comprise an indirect or direct user identifer, including for example, a device digital certificate or subscriber identification module (SIM) card or any other form of identifier capable of being associated with an individual.

One of the characteristics may comprise an identifier for the local area network within which the device is roaming.

One of the characteristics may comprise an identifier for the wireless access point providing said local area network.

The method may further comprise processing intercepted traffic to determine the location of the access point from which the roaming device traffic originates.

The method may further comprise processing intercepted traffic to determine a user associated with the roaming device.

Another aspect of the invention seeks to provide a wireless network access point arranged to forward signalling traffic to a network node comprising means arranged to implement the above method aspect.

Another aspect of the invention seeks to provide a network node comprising means arranged to implement processing of traffic received from said plurality of tunnels and to generate duplicate traffic comprising traffic which duplicates one or more of said received traffic characteristics..

Another aspect of the invention seeks to provide a monitoring node arranged to receive said duplicated traffic from roaming users.

Another aspect of the invention seeks to provide a monitoring system arranged to enable monitoring of traffic in a communications system, the traffic originating from a plurality of devices roaming in a plurality of wireless local area networks, the monitoring system including:
means arranged to receive signalling traffic from a plurality of secure tunnels, each tunnel associated with a wireless network access point;
means arranged to duplicate one or more characteristics of the received signalling traffic to form a pair of duplicated versions of said received traffic;
means arranged to forward one duplicated version to a monitoring means;
wherein said monitoring means is arranged to process received signalling traffic to determine from one or more characteristics of the received signalling traffic information enabling the identification of the device and the location of the wireless network,
wherein said signalling traffic is generated by a roaming device which has associated with one or more of said wireless local area networks.

Another aspect of the invention seeks to provide a monitoring network arranged to enable monitoring of traffic in a communications network, the traffic originating from a plurality of devices roaming in a plurality of wireless local area networks, the monitoring network including:
at least one network node comprising:
   a receiver arranged to receive signalling traffic from a plurality of secure tunnels, each tunnel associated with a wireless network access point;
   a processor arranged to duplicate one or more characteristics of the received signalling traffic to form a pair of duplicated versions of said received traffic; and
   a transmitter arranged to forward one duplicated version to a monitoring network node;
wherein said monitoring network node comprises:
a receiver arranged to received said forwarded duplicated version of said signalling traffic;
a processor arranged to process the received version of said signalling traffic to determine from one or more characteristics of the received version of the signalling traffic information enabling the identification of the device and the location of the wireless network,
wherein said signalling traffic is generated by a roaming device which has associated with one or more of said wireless local area networks.

Another aspect of the invention seeks to provide a signal comprising a duplicated version of said signalling traffic according to any previous aspect.

According to the invention, a secure tunnel is established for users roaming in a particular wireless local area network which separates roaming traffic from non-roaming traffic which the subscribers providing a particular wireless access point for that local area network may generate. This ensures that when traffic is monitored, it is relatively easy to establish from the network SSID if the traffic originates from a user who is roaming within that network or not.

It is desirable if traffic from a device can be intercepted for monitoring purposes in a manner which is legally compliant with the minimal amount of dissemination about the identity of the monitored device and/or user.

It is further desirable if the location of a device can be determined prior to authentication for roaming use over a network..

It is further desirable if changes to the location of a device can be determined even when not authenticated for use over a network.

It is also desirable if a device which has been used to access a particular web-site can be tracked to a particular user and/or location.

It is particularly desirable if one or more of: identification, interception, monitoring, and location determining and tracking can occur in real-time.

One or more embodiments of the invention may seek to provide a data interception scheme which enables traffic from a guest or visitor's device which is located within the area of network coverage provided by an access point to be intercepted and/or monitored even when the guest or visitor has not attempted to access the internet, for example, even if the user has not attempted to log-in and/or use a web-browser to access a particular web-service or another application which requires the use of internet connectivity. The device may need to be in one of a plurality of guest networks which share a guest network Service Set IDentifier (SSID), in at least one of which the device has previously associated with a guest network with the guest network SSID.

In some scenarios, all roaming WLANs are assigned a consistent SSID, which means a device which has successfully attached whilst roaming to one network SSID may automatically generate signalling traffic when it roams in other WLANs sharing that SSID. This signalling can include IP address information which is generated without a user necessarily actively using the device to generate a request for service (such as, for example, generating a request for content which would require the device to connect to the internet) which would require the user to authenticate their use of the wireless access point roaming service.

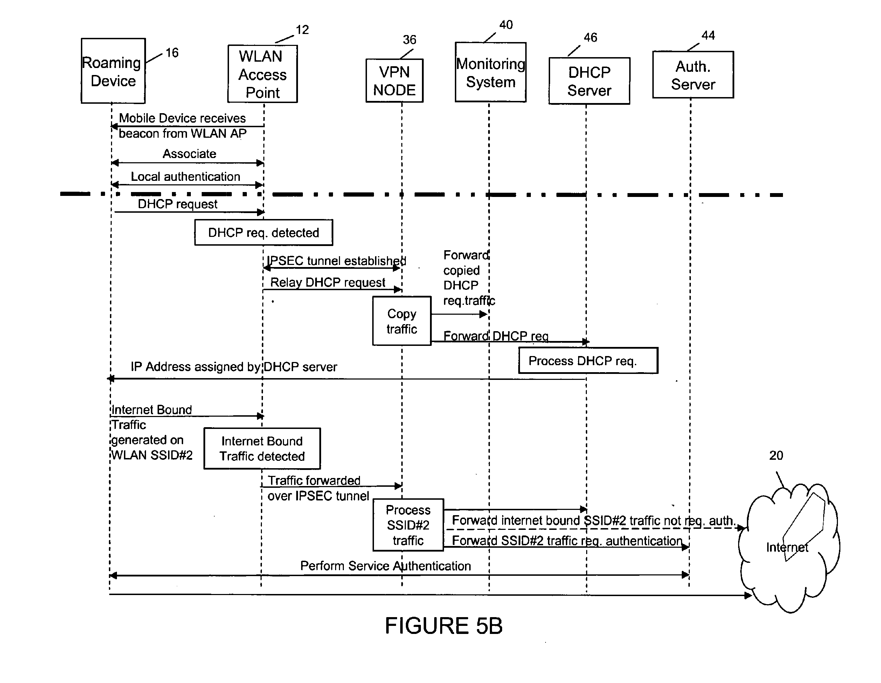

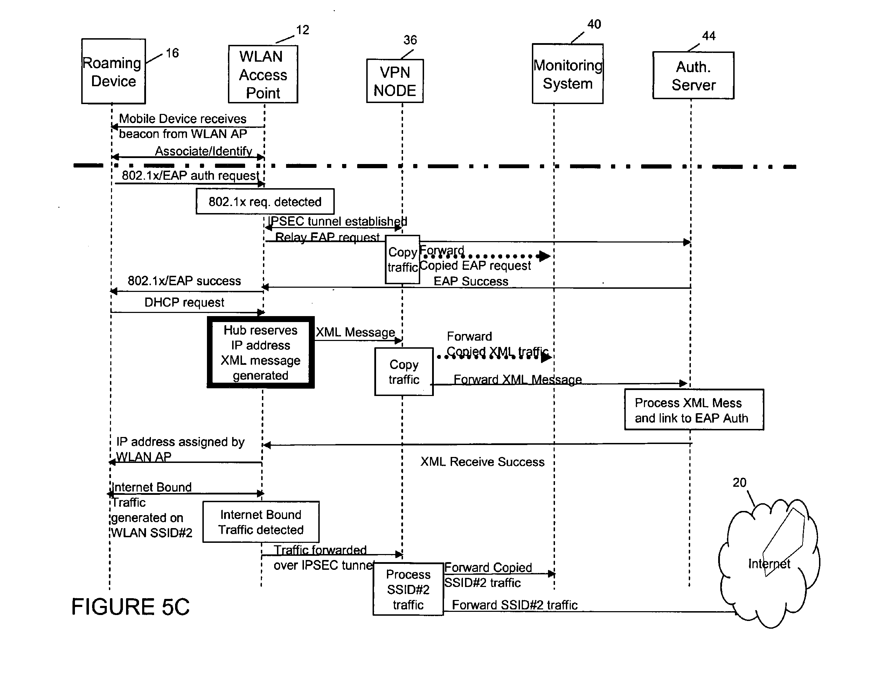

A method of monitoring according to some embodiments of the invention (for example, such as are shown in Figures 5b, 5c) enables traffic to be intercepted and duplicated even prior to one or more of said users being authenticated. In such embodiments, there is no need for a user to attempt to login to use a WLAN in order to locate where a roaming device is. Instead, if the device generates data packets which are received by a wireless access point and the wireless access point is configured to generate a secure tunnel to a terminating platform in the core network for the type of traffic the data packets comprise, then the packets which are forwarded over the secure tunnel can be used for duplication and monitoring by suitable network platforms. Moreover, in some embodiments, a wireless access point may be configured to generate packets which include information on roaming devices in their area of network coverage and include this information prior to releasing IP address to the roaming devices.

To distinguish roaming traffic from the traffic a home user (a term used herein to refer to the user who is a registered service subscriber for that a particular access point or AP) has generated, a virtual private network (VPN) is established using a secure tunnel for example, an IPSEC tunnel, from the AP to a suitable platform for terminating the VPN within the core network. All traffic originating from the roaming device passes through the IPSEC tunnel, including signalling traffic which is generated prior to the device seeking to use the WLAN for accessing the internet and/or prior to authentication. Authentication traffic is also forwarded to an appropriate authentication platform using the secure communications link to the VPN , (i.e., using the IPSEC tunnel). Until authenticated, user traffic is blocked at this point so that it does not propagate further in the network. However, the traffic generated can be intercepted and information extracted about the user, the device being used, and the wireless access point being used. From this information, it is possible to determine the geographic location of a particular wireless access point, device and/or user.

The details of the device and/or user identifiers need not be shared with any third parties as all information is sent to the monitoring point, although information enabling the identification of relevant third parties, such as internet service providers, may also be included in the information intercepted.

Embodiments of the invention will now be described with reference to the accompanying drawings which are by way of example only and in which:
Figure 1 shows a communications system according to the invention;
Figures 2A, 2B, and 2C show alternative ways of assigning an address according to different embodiments of the invention;
Figure 3 shows how a private address may be monitored in an embodiment of the invention;
Figure 4 shows steps in a monitoring method according to an embodiment of the invention; and
Figures 5A,B, and C show the different types of signalling traffic monitored in different embodiments of the invention.

The best mode of the invention will now be described with reference to the accompanying drawings. In the following description of the preferred embodiments of the invention, those of ordinary skill in the art will be aware of modifications and functional equivalents to those features of the invention which are described herein below and that certain features of the invention may be omitted from the description for the sake of brevity and clarity where their inclusion and function as part of the invention is apparent and known to those of ordinary skill in the art.

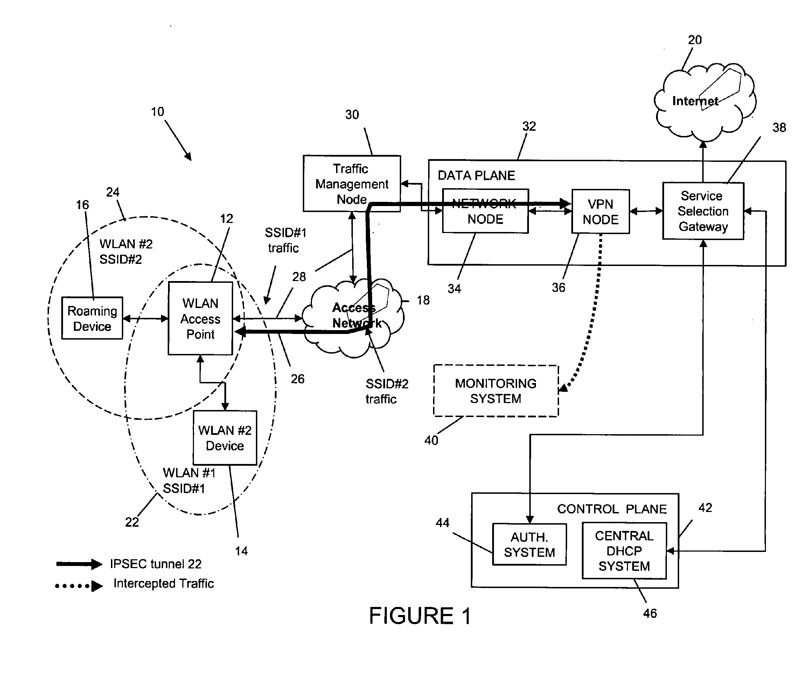

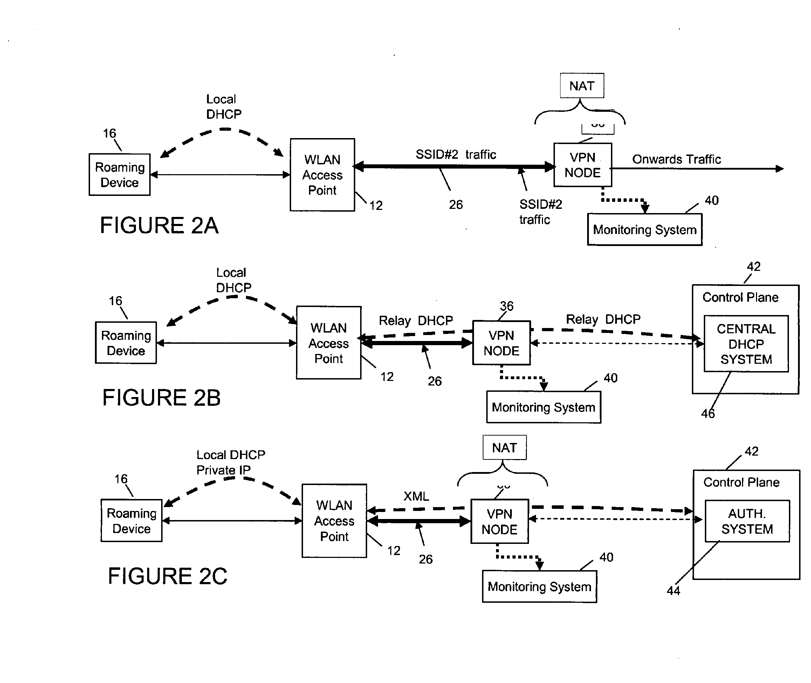

Figure 1 of the accompanying drawings shows a communications system 10 which comprises a plurality of wireless local area network (WLAN) access points (APs) 12, of which just one is shown, which provide one or more devices 14, 16 connectivity over access network 18 to the internet 20. WLAN AP 12 supports traffic separation by having the capability of assigning a device 14, 16 to one of at least two network service set identifiers (SSIDs). As shown in the exemplary scenario of Figure 2, WLAN AP 12 enables a user who has subscribed to an internet service provider to access the internet 20 using the WLAN AP 12 via one of two WLANs 14, 18, depending on whether their device 14 associates with a first network 22 (SSID #1), which may be reserved for non-roaming traffic, or with a second network 24 (SSID#2), which is reserved for a roaming device(s) 16. The WLANs may provide any suitable short to medium range wireless communications network, for example, a network conforming to the IEEE 802.11 suite of wireless communications protocols, including the Wi-Fi and also the IEEE 802.16 (Wi-MAX) suite of high-bandwidth communications protocols, or any other suitable communications protocol, for example, a short-range radio-frequency communications protocol such as Bluetooth™. A roaming device may comprise any suitable mobile communications-enabled device which can attached to the WLAN 24 the WLAN AP provides for roaming users, including but not limited to: portable computers, cellular communications telephone handsets, games consoles, audio and or video content players and/or recording devices and/or any other suitable electronic hand-held or otherwise portable devices for which wireless connectivity is enabled.

A request to access the Internet 20 is generated directly when a user of a device 14, 16 launches a world-wide-web internet browsing application or launches any other application which requires data to be provided from a remote server accessible via the internet 20. Such requests comprise Internet bound traffic and usually require the user of a roaming device 16 to be authenticated to use the service offered by the internet service provider associated with the wireless access point 12, which may not be the service provider with whom the user of device 16 has established a service account. Under such circumstances, the user of a roaming device 16 must be somehow authenticated to use a roaming service when the roaming device 16 generates a request to access a server located in an intranet, and/or portal application and/or the Internet 20 outside the service area for which the user's own internet service provider account has authorized their use (referred to herein as a "home" WLAN). A home WLAN comprises an area of network coverage provided by a wireless network access point which a user has configured devices to be automatically be authenticated for using that user's service account details with that internet service provider. Many systems are known in the art which enable a user to obtain access to the internet 20 whilst their device 16 is roaming.

One system as shown in Figure 1 enables a user to access the Internet using a roaming device providing that they have subscribed to an Internet Service provider which enables other devices to roam whilst in the area of wireless network coverage their own access point provides. Providing a subscriber has configured their own wireless access point 12 to provide a roaming service (i.e., a guest or visitor WLAN 24) to visiting devices 16, that subscriber can use one or more devices as roaming devices 16 in other subscriber's guest networks 24 when the device is outside the area of network coverage provided by the subscriber's own "home" network 22.

A roaming service may be provided by a roaming device 16 detecting a network beacon from a WLAN access point (AP) 12 and associating with that WLAN AP's guest network 24. An IP address is requested by the device 16 and assigned to the device 16 by the WLAN AP 12. When the user of the device 16 subsequently attempts to access internet 20, the WLAN AP 12 separates the roaming traffic received over the guest WLAN 24 by sending it on a separate, usually secure, communications link 26 over the access network 18 to a suitable check-point. At the check-point, the internet access request is processed and its progress interrupted if it comprises traffic for which authentication to use the roaming service is required. An authentication challenge is sent to the roaming device 16 at this point and if the device 16 responds (normally with user account information such as a username and/or password), the roaming traffic internet access request is forwarded on to its original destination request and the device 16 can connect to a remote server (not shown) via internet 20.

Many techniques are known for intercepting non-roaming traffic, comprising traffic generated in a WLAN by a roaming device 16, and for extracting information from intercepted traffic. For example, by virtue of the SSID known to be associated with the WLAN AP 12, the location of the originating roaming device 16 can be determined and through the service account details, a possible user of the device 16 determined. However, monitoring traffic generated by roaming devices 16 is more problematic given the technical and legal constraints which such monitoring activities require.

The embodiments of the invention support monitoring of roaming traffic for a range of purposes. For example, technical purposes include assessing the usage of the roaming network service and the service characteristics offered to roaming devices 16. Commercial purposes include targeted advertising of only roaming devices 16 and not of device located with the so-called home network 22. Tracking the location and/or monitoring the destination and source of traffic to specific sites, and/or the sites visited by a particular user, and the location of a particular user is also possible. Moreover it is possible to track the proximity of a group of users to each other by monitoring roaming networks, for example, to enable crowd control and other proximity indicator alarms to be automatically configured. As roaming traffic monitoring may be performed for a number of technical, commercial and legal reasons and may involve monitoring devices associated with a number of different internet service provider accounts, a number of technical and legal constraints are imposed on the way traffic is intercepted for monitoring and the type of traffic intercepted.

Known systems monitor roaming traffic in such as way as to require details of the accounts to be monitored to be passed to the relevant internet service providers. This enables the roaming traffic to be intercepted when a user authenticates a device to use the roaming service and enables the user identity to be associated with a particular roaming device.

In the embodiment of a communications system shown in Figure 1, it is possible to intercept roaming traffic prior to the device/ its user being authenticated and for signaling traffic generated by a roaming device 16 prior to any internet access request being generated by the device 16 to be intercepted and monitored. As shown in the exemplary embodiment of Figure 1, the WLAN AP 12 provides two communications links 26, 28 over access network 18 to internet 20. The non-roaming traffic is sent over a first communications link 28 via a traffic management node 30 and onwards to internet 20. Roaming traffic is sent over a separate secure communications link 26 which also passes through intermediate nodes 30, 32 to a secure communications link terminal point, for example, a virtual private network (VPN) node 34. An example of a suitable secure communications link comprises an Internet Protocol Secure (IPSEC) tunnel between the WLAN AP 12 and the VPN node 36.

As shown in Figure 1, VPN node 36 is configured to generate a pair of duplicated versions of traffic received over the secure communications link 26 from WLAN AP 12 and to forward one version of this traffic to a monitoring station 40 and the other version to the service selection gateway (SSG) 38. The SSG 38 determines the appropriate roaming service associated with the roaming device 16 and routes the roaming traffic accordingly. Roaming device traffic may require authentication in which case the SSG 38 forwards the traffic on to the control plane 42 where the roaming device 16 is authenticated using a suitable authentication server system 44. In some embodiments of the invention a central address server 46 is provided for assigning addresses to roaming devices 16, for example, as shown in Figure 1 the control plane 42 includes a central address server 44 comprising a Dynamic Host Control Protocol (DHCP) server which allocates IP addresses to roaming devices 16.

Figures 2A,2B and 2C show various ways of distributing addresses to roaming devices 16 and also how information on a distributed address can be further disseminated within communications system 10.

In Figure 2A, after a roaming device 16 has associated with a WLAN AP 12, the device automatically requests an IP address from the WLAN AP 12, for example, by sending a DHCP IP address request to the WLAN AP 12. The WLAN AP 12 responds by locally allocating an IP address to the roaming device 16 from a range of local IP addresses it is configured to distribute to roaming devices. The IP address allocated may be a public address in that it can be uniquely resolved outside the WLAN 24 associated with that WLAN AP 12 to a unique device, but usually one or more layers of network address traversal (NAT) will be used to enable reuse of the IP address space. This means that beyond the secure communications termination point (here VPN node 36), it is not directly possible resolve the IP address of any communications traffic received over the secure communications link 26 from a roaming device 16 or sent to a roaming device 16. Accordingly, any roaming traffic received at monitoring system 40 cannot be easily associated with a unique roaming device 16.

In Figure 2B, the roaming device 16 generates a local DHCP request, but instead of allocating an IP address itself, the WLAN AP 12 relays the DHCP request over the secure communications terminal to the VPN node 36 which duplicates the DHCP request traffic and forwards one version via SSG to the control plane 42, where DHCP server 46 then allocates an IP address. As the VPN node 36 is automatically configured to copy traffic received from and sent to secure communications links 26 with a plurality of WLAN access points 12 it is possible as such traffic contains certain characteristics enabling useful information to be determined at this point at the monitoring system 40 regarding the identity of the roaming device, its location and/or its user(s).

For example, as is shown in Figure 2B, the relayed DHCP request typically contains information such as a roaming device identifier, for example, a MAC source address for a roaming device 16, a WLAN AP identifier, for example, the IP source address of the WLAN AP 12. The monitoring server system 40 can associate such device and WLAN AP identifiers with the location of the WLAN AP 12 by determining to which broadband access service provider the WLAN AP with that MAC address is associated and/or the fixed or wireless communication line identifier that particular WLAN AP is registered to use. If the device identifier resolves to a type of device for which a user has account information, it is possible to associated a particular user with a location and to monitor movements of the user as the device roams between networks. This is possible even if the device does not attempt to use the networks for roaming services, once a device 16 has associated with a WLAN 24 and requested a network address in a roaming WLAN 24 provided by a WLAN AP 12 which generates and/or forwards address request traffic for that roaming device 16 over a secure communications link 24 to a termination point 36 arranged to automatically forward such traffic to a monitoring point 40.

Moreover, in such systems, subsequent internet-bound traffic which contains the centrally allocated DHCP IP address can be resolved through the VPN node to a unique device, as the device identity can be determined at the VPN node by the monitoring server 40 querying the DHCP server to determine the identifying MAC address of a roaming device associated with a particular IP address in use. VPN node 26 is configurable to copy in-bound traffic to roaming devices 16 and to forward a duplicated version of such in-bound traffic to monitoring server 40. In one embodiment of a method of monitoring roaming traffic according to the invention, a monitoring station 40 associates via a DHCP IP address request the MAC address of a roaming device 16 with a particular WLAN AP 12, and from that the location of the roaming device 16. This information is then suitably stored in a retrievable form. The DHCP IP response is then also intercepted, which enables this record to be supplemented with the centrally allocated DHCP address request. If the roaming device subsequently requires authentication by a user, the WLAN AP 12 will forward an authentication request to the authentication server 44. If the user information detected is then separately associated with a previously stored MAC address for the roaming device 16. This then enables monitoring of traffic generated by a particular roaming device 16 based on its current IP address as that inbound traffic is being sent to a particular device using that current IP address at the monitoring server 40. In this way, the traffic sent and received by a particular device whilst roaming can be monitored along and the geographic location of that device determined. Providing the relevant information is stored in a suitable form for rapid indexing and retrieval, in this way real-time monitoring and device tracking can be performed. It is also possible to verify the actual user of a device from the user account information entered during the authentication process.

Figure 2C shows an alternative mechanism for associating authentication information for a user of a roaming device 16 with a private IP address assigned locally to the roaming device 16 by the WLAN AP 12. In Figure 2C, the WLAN AP 12 allocates a private IP address to a roaming device 16 from a range of possible addresses allocated to the WLAN AP. A roaming device 16 is not assigned the IP address until after the device 16 has been authenticated by authentication server 44. In the authentication traffic, however, the IP address will be that of the WLAN AP 12. In order for the authentication server 44 to know which NAT translated IP address has been authenticated, so that only IP traffic from an authenticated device is allowed to access internet 20, the WLAN AP is configured to generate a separate authentication message, for example an extensible MetaLanguage (XML) message. The XML contains sufficient information for the roaming device 16 to enable the authentication server 44 to make the necessary association of the NAT translated IP address of the authentication traffic originating from the roaming device 16 with NAT translated private IP address allocated by the WLAN AP to that particular roaming device 16, for example, the meta-data may include the roaming device Media Access Control (MAC) address, the WLAN AP MAC and/or IP addresses, and/or any other relevant information. As this traffic is intercepted by the monitoring station 40, it is also available to track the location and internet usage of a particular roaming device 16 and/or determine an authenticated user of a particular roaming device 16 whose traffic is being monitored.

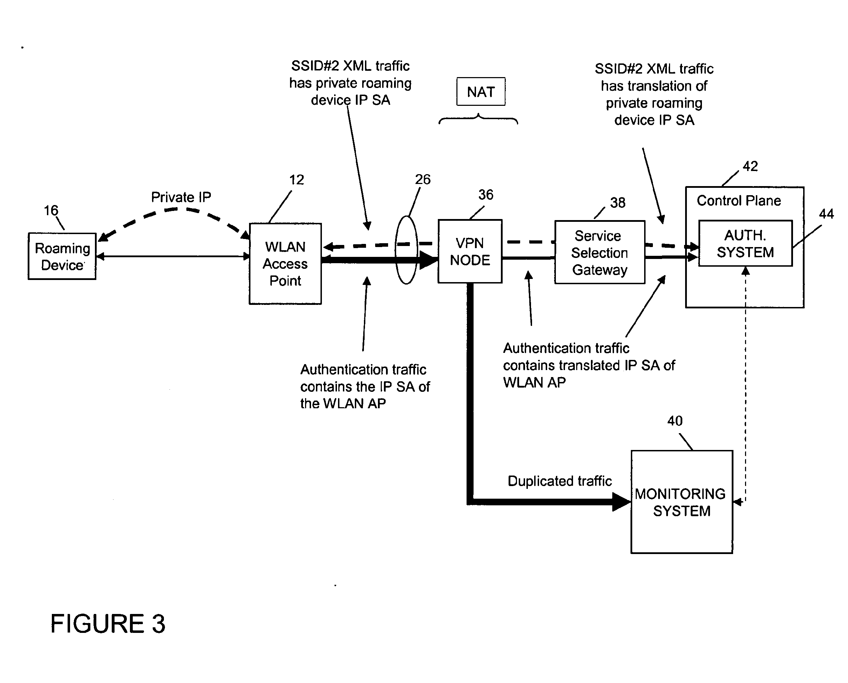

Figure 3 shows NAT translation provided between the WLAN AP 12 and the SSG 38 and authentication server 44. In this embodiment, the traffic from the roaming device 16 undergoes NAT translation prior to reaching authentication server 44. This traffic is transmitted using the privately assigned IP address of the roaming device 16. However, the actual traffic which is authenticated in this embodiment will have a translated IP address by the time it reaches the SSG 38 if it has undergone NAT one or more times. Accordingly, it is necessary for the SSG 38 (and accordingly the authentication server 44) to know what the NAT translated IP address is of a given authenticated device if the internet traffic this device generates is to be authorized on the basis of its source IP address to proceed on to the internet 20.
As shown in Figure 3, a meta-data message is generated by the WLAN AP 12 to enable the authentication server 44 to determine the translated IP source address (SA) of a roaming device 16. The WLAN AP 12 is configured to generate a meta-data carrying message which contains as the IP SA the private IP SA allocated by the WLAN AP 12 to the roaming device 16. This meta-data carrying message is sent to the authentication server over the same secure communications link 26 as the authentication traffic and so undergoes the same NAT traversal as the authentication traffic. By replacing its own IP source address with the IP source address allocated to the roaming device in a message which includes a device identifier (for example, the MAC address of the roaming device 16), the authentication server can associated the received message with an authenticated device and map to that authenticated roaming device's record the NAT translated IP address provided by the meta-data message. In this way, traffic which has as a source address the roaming device's NAT translated IP address is authorized to access the internet 20. It also enables the monitoring server system 40 to intercept traffic with a particular NAT translated IP address and associate this traffic with a particular device and/or user and/or geographic location.

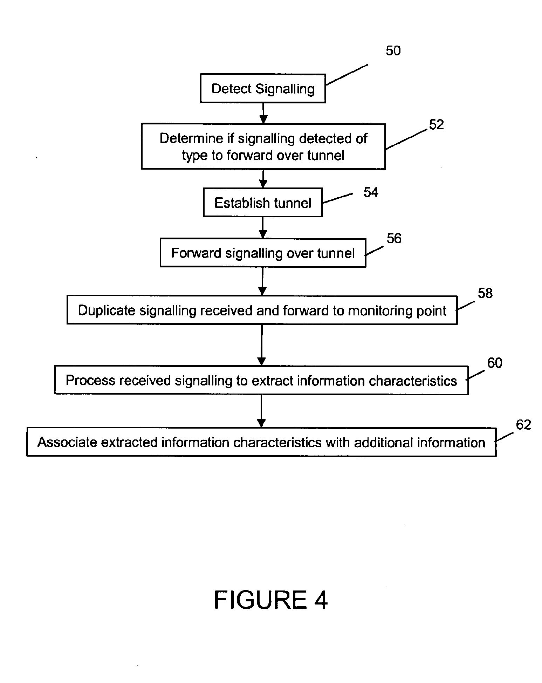

Figure 4 shows some exemplary steps in a method of monitoring roaming traffic according to an embodiment of the invention in which a WLAN AP 12 first detects signaling traffic from a roaming device 16 (step 50) and then processes the traffic to determine from the characteristics of the signaling traffic if a local response is required or if it is to establish a secure communications link 26 to a termination point 38 in communications system 10, such as a VPN node 38 (step 52). If the received traffic is determined to require forwarding into the communications system 10, the WLAN AP 12 establishes an IPSEC tunnel (step 54) in one embodiment of the invention with VPN node 38. VPN node 38 is configured to duplicate all packets received on one or more predetermined ports and forwards the packets out on another predetermined port to a monitoring server 40 (step 58). The monitoring server 40 then processes the received packets to extract one or more information characteristics such as, for example, one or more of: a source address of a particular packet, an identifier for the device which generated the packet, the source address and/or identifier for the WLAN AP 12. It may also extract meta-data including, for example, a user identifier for a user of the device which generated the traffic (step 60) or a SSID allocated as well as authentication information. One or more information characteristics may be determined directly from a received packet or plurality of packets or by further associating directly determined information with additional information, for example, additional information which may be obtained by querying the control plane 42 for additional authentication and/or address allocation information from an authentication server system 44 and/or a central address allocation system 46.

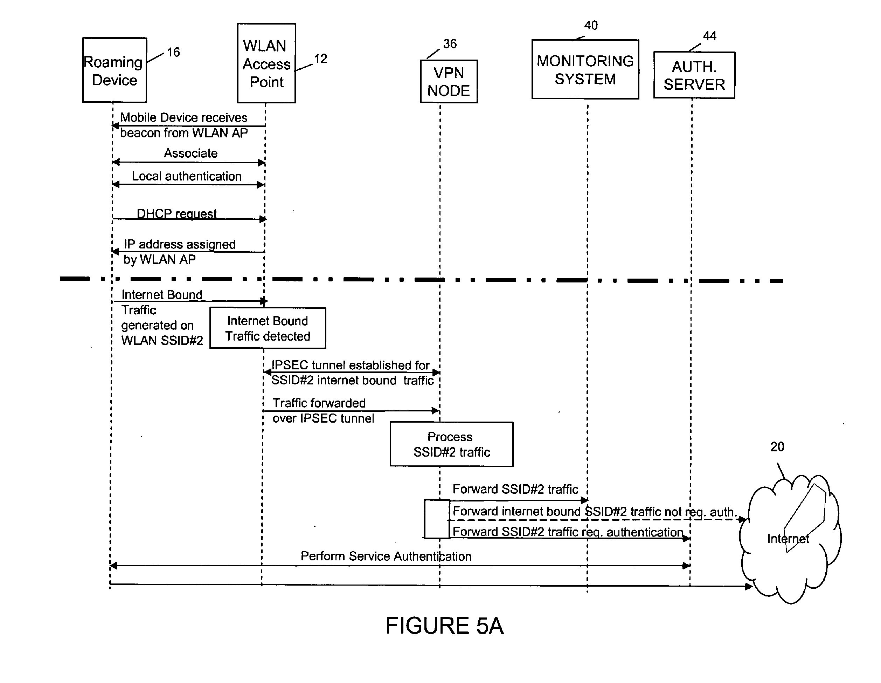

Figures 5A, 5B, and 5B show some exemplary messages which are sent in order for a roaming device 16 to generate traffic that is intercepted and monitored in a communications system 10 according to different embodiments of the invention. The message flows shown in Figures 5A,B and C may omit messages known in the art as essential but which are not relevant in the context of the embodiments shown.

Figure 5A shows a roaming device 16 detects a beacon from WLAN AP 12 and associates with WLAN AP 12. The device is locally authenticated automatically if, in the case where roaming networks of a plurality of APs have been assigned the same SSID#2, the device has previously been authenticated to use the roaming service offered by one AP by providing appropriate authentication information (often this is a public network where no authentication is required at this stage but sometimes username, service provider in the form of a realm and password are used). The authenticated device is then allocated an IP address by the WLAN AP 12 and can utilize the WLAN 24 with SSID#2. If at some subsequent point in time whilst the device is still associated with WLAN 24 it generates internet bound traffic, for example, by generating a service request using a web-browser or otherwise launching an application which requires internet connectivity, the WLAN AP 12 determines from the destination IP address that the traffic is internet bound and establishes a secure communications link 26 in the form of an IPSEC tunnel 26 to the VPN node 36. VPN node 36 is configured to duplicate all traffic associated with SSID#2 received on a particular port associated with IPSEC tunnel 26 and forwards this traffic to monitoring server 40. VPN forwards the received traffic on to SSG 38 which determines if the traffic from that device requires authentication before accessing the internet 20 or if it can be routed directly towards internet 20. If authorization is required, the VPN node intercepts the authentication traffic generated by the authentication server which also uses the same IPSEC tunnel 26. In this way, the monitoring system 40 is provided with information which includes the device identifier and information enabling the location of the device even if a user of the device does not successfully complete their authorization or does not require authorization for a particular internet-bound service request to be delivered. The monitoring server 40 does not need to access the authorization server and so there is not need to identity to the authorization server the identity of any particular user or device which is being monitored in this way. However, where service authentication is required, as all authentication traffic flows through the same VPN node, it is also possible to monitor and track this information when appropriate.

Figure 5B shows exemplary messages such as may flow in an alternative embodiment of the invention. In Figure 5B, roaming device 16 detects a beacon from WLAN AP 12 and associates with AP 12 and assuming the roaming device 16 has previously been authenticated by a user to use the roaming service, the roaming device 16 automatically performs local authentication (often this is a public network where no authentication is required at this stage but sometimes username, service provider in the form of a realm and password are used). The roaming device then generates a DCHP request for an IP address which is detected by the WLAN AP 12. In this embodiment, WLAN AP 12 is configured to relay the DHCP request to a central address server 46. Accordingly, when WLAN AP 12 receives the DHCP request, it establishes a secure communications link 26, for example, an IPSEC tunnel, to a termination point in the communications system 10 at which point the traffic can be duplicated and a duplicated version monitored at a suitable monitoring point 40. As shown in Figure 5B, WLAN AP establishes an IPSEC tunnel to VPN node 36 and relays the DHCP request over this tunnel to the VPN node 36 which copies the DHCP request. One version of the copied DHCP request is sent to the monitoring server system 40. The other version is end to a central DHCP server 46 in the control plane 42 which processes the request and responds over the same IPSEC tunnel via the WLAN AP 12 to assign an IP address to the roaming device 16. After having an IP address remotely assigned in this way, when the WLAN AP 12 detects internet bound traffic from the device 16 it can be forwarded using the same (or a new) secure link 26. If authentication is required for this traffic, this proceeds at this point in a similar manner to that shown and described before with reference to Figure 5A with all traffic sent over the secure link 26 being intercepted at VPN 36 and forwarded to the monitoring station 40.

As shown in Figure 5B, however, it is possible for the monitoring station to intercept traffic prior to a device generating internet-bound service requests or authentication information. The address request (in this example, a DHCP IP address request), and any other signaling the device generates for which the WLAN AP 12 is configured to establish a secure communications link to the communications system 10 for and to forward over that link is capable of being monitored by the monitoring system 40.

Figure 5C shows another alternative embodiment in which a roaming device authenticates using the IEEE 802.1x communications protocol for port-based network access control (PNAC) It provides an authentication mechanism for a device to attach to a WLAN to provide a point-to-point connection only if authentication is successful. IEEE 802.1x uses the Extensible Authentication Protocol (EAP) over LANs (EAPOL) for IEEE 802 LAN technologies such as the 802.11 wireless communications suite. A port in the 802.1x communications protocol refers to a single point of attachment to the WLAN infrastructure such as a particular roaming device 16. The WLAN AP 12 authenticates a roaming device 16 using a remote authentication server 44 such as a host platform arranged to support the EAP and RADIUS (Roaming Authentication Dial In User Service) which provides a centralized authentication, authorization, and accounting management. EAP authentication is well known in the art and is not described further herein.

In the embodiment of the invention shown schematically in Figure 5C, the use of the 802.1x protocol for roaming device authentication enables monitoring point 40 to determine additional information from the unencrypted outer layers of the EAP over RADIUS authentication traffic sent over the IPSEC tunnel established by the WLAN AP 12 with VPN node 36 as well as from the XML message the WLAN AP 12 generates when the roaming device 16 requests an IP address.

As shown in Figure 5C, roaming device 16 detects a beacon from WLAN AP 12 and having associated with the WLAN 24 the roaming device generates an EAP authentication request and sends this to the WLAN AP 12. The EAP authentication request is automatically triggered on association. When the WLAN AP 12 detects it has received an EAP request, it establishes an IPSEC tunnel 26 to VPN node 36 via which the EAP request is relayed to a suitable authentication server system 44. The EAP request is duplicated at the VPN and forwarded to monitoring server system 40. As the EAP request is relayed from the WLAN AP to the remote authentication server its source address undergoes NAT translation. This means that the authentication system cannot authenticate IP traffic based on just the source IP address as the authentication system (and similarly the monitoring system) has only a NAT translated WLAN AP 12 IP SA address. The monitoring server system 40 can be optionally configured to be triggered by the detection of an EAP request to monitor traffic generated by authentication server system 44 responsive to that EAP request. If the EAP request is successful, the roaming device 12 is authorized to use the WLAN 24 to send a local DHCP request to the WLAN AP 12.

The WLAN AP 12 then allocates an IP address for the roaming device 16 and generates a meta-data message in which its own address is replaced as the source address with the IP address it has allocated for the roaming device 16. This message contains other device identifying information and enables the authorization server to associate the NAT translated address of the message it receives from the WLAN AP 12 with the authentication information. This enables the communications system 10 to be configured to allow internet traffic from roaming device 16 to access the internet 20 based on the NAT translated source IP address of the roaming device. It also accordingly enables the monitoring station 40 to track traffic generated by the roaming device 16 and traffic sent to the roaming device 16 using the NAT translated source IP address of the device.

Once the authentication server 44 has linked the NAT traversed IP address allocated by the WLAN AP 12 to the roaming device 16, it indicates to the WLAN AP12 that the roaming device using that IP is authenticated to use the communications system 10 to access internet 20. WLAN AP 12 then releases the allocated IP address to the roaming device 16. Additional authentication may be performed at this point and/or the roaming device 16 is in one embodiment automatically enabled to access the internet 20 without any prompts being generated for user input. Where the roaming device 16 is automatically authorised and authenticated for internet access using this type of EAP and XML based authentication and advantage is that the user is not requested to enter any additional account or authentication information when an application launched on the device generates a service request requiring internet connectivity (i.e., there is no requirement to halt access to the internet whilst such authentication information is provided). Where such applications are provided on a device and are configured to automatically request information even when roaming in a guest WLAN 24, the traffic generated by the roaming device 16 can be easily distinguished from the traffic generated by the home user of a WLAN and the device activity and related information remotely monitored within the communications system 10 by monitoring server system 40.

Various embodiments of the invention described herein above provide a monitoring system which is arranged to enable monitoring of roaming traffic in a communications network but the invention is not intended to be limited to the specific embodiments described. The roaming traffic which is monitored includes signalling traffic which originates from one or a plurality of devices roaming in one or a plurality of wireless local area networks and are operated by one or a plurality of different users. According to the various embodiments described herein, a VPN node 36 is configured in the communications system 10 to duplicate any traffic, including signalling traffic received from a plurality of secure tunnels 26, each tunnel associated with a wireless network access point 12 from within which traffic is being generated by one or more roaming devices. It is also possible, in some embodiments of the invention, to duplicate any traffic arriving at the VPN node 36 which is to be sent out to a roaming device 16 over a secure tunnel 26. In one embodiment a traffic signal is duplicated. Alternatively, the contents of each received packet of information duplicated or just of selected packets. Accordingly, a pair of duplicated versions of received traffic. are formed using any suitable mechanism and/or selection criteria and one version is forwarded to an appropriately configured monitoring system and the other version forwarded onwards as appropriate for its purpose. The monitoring system processes the received traffic to determine appropriate information, for example, information which enables the identification of the device and/or the location of the wireless network access point and/or other information such as a user identifier and/or related user account information and/or traffic which is sent to or generated by the device and/or meta-data about the roaming device and/or wireless access point used and/or user of the device. The signalling traffic which is monitored is generated by a roaming device which has previously associated with one or more of said wireless local area networks and in some embodiments which has already been configured to be locally authorised to use the roaming service. However, the monitored signalling traffic includes traffic generated before the device or its user has been authenticated and may include traffic generated during the assignment of an IP address. The device does not have to generate a request to use of the roaming service to trigger the monitoring of its signalling traffic. In other words, a user of the device does not have to request internet access in order for signalling traffic to be monitored, as the wireless access point is configured to establish a secure link for certain types of traffic prior to a duplication point for monitoring purposes prior to the user authentication process being complete.

Monitoring traffic generated during and after authentication is also possible. Figures 2A and 5A show schematically how if DHCP service address allocation occurs at the network edge and NAT is used within the core network, a user is only identifiable after they log in to the roaming service. In Figures 2B and 5B, DHCP relay is used which means that user can be identifiable before they log in to the roaming service, depending on where NAT occurs in the communication system. In Figures 2C, 3 and 5C, DHCP occurs at the network edge but as the WLAN AP provides additional data to the core by sending an additional message it is still possible to identify a user even if NAT has occurred, and this is also possible before the user has logged in to the roaming service.

Exemplary embodiments of the invention are described in detail herein above and pictorially in the accompanying drawings, however, the invention is not intended to be limited to such exemplary embodiments and includes various obvious modifications and equivalent arrangements which fall within the scope of the appended claims. Features referred to explicitly herein and in the claims may be replaced with alternative features providing functional equivalents where such functional equivalents would be known to those of ordinary skill in the art.

In the above description, references to "one embodiment," "an embodiment," "example embodiment," "various embodiments," etc., indicate that the embodiment(s) of the invention so described include a particular feature, structure, or characteristic. However, it is not necessary for every embodiment to comprise that particular feature, structure, or characteristic. Where the phrase "in one embodiment," or "in an exemplary embodiment," is referred to herein above it may or may not refer to the same embodiment as would be apparent to one of ordinary skill in the art.

Terms referring to features such as, for example, "processing," "computing," "calculating," "determining," or the like refer to an action and/or process(es) undertaken by a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

The term "computing platform" comprises one or more data processors, where a data "processor" refers to any device or portion of a device that processes electronic data from registers and/or memory to transform that electronic data into other electronic data that is capable of being stored in registers and/or memory.

One or more embodiments of the invention include apparatuses for performing the operations herein. An apparatus may be specially constructed for the desired purposes, or it may comprise a general purpose device selectively activated or reconfigured by a program stored in the device.

Where appropriate, a feature described herein in an embodiment of the invention may be implemented in one or a combination of hardware, firmware, and software. Where a feature is implemented as instructions stored on a machine-readable medium, such instructions may be read and executed by a computing platform to perform one or more or all of the operations and/or method steps described herein.

The term "machine-readable medium" comprises any mechanism for storing or transmitting information in a form readable by a machine (e.g., a computer). Examples of machine-readable mediums include, but are not limited to : read only memory (ROM), random access memory (RAM), magnetic disk storage media, optical storage media, flash memory devices, and propagated electrical, optical, acoustical or other suitable digital and/or analogue signals (for example, carrier waves, infrared signals, digital signals, etc).

References to the term "computer program" and/or "computer control logic" include as appropriate references to machine code and/or executable code and/or source code which when compiled results in execution on a computing platform of the computer program.

A computer program may be provided in an electronically downloadable format or in a format which is stored in the main memory and/or secondary memory of a computing platform and/or data storage means capable of being attached and removed from a computing platform. Where a computer program is stored in one or more data storage means it comprises a computer program product. Such computer programs, when executed, are arranged to enable the computer platform or system to perform the features of the present invention as discussed herein. In particular, the computer programs, when executed, are arranged to enable a processor to implement one or more steps in a method according to an embodiment of the invention. Accordingly, such computer programs may represent data controllers of the computer system.

A computer program product comprising a computer readable medium having control logic (computer software) stored therein may be provided to distribute the invention or cause, when the product is loaded and running on one or more computer platforms, a method according to an embodiment of the invention to be performed. The control logic, when executed by one or more processors, causes the one or more processors to perform one or more of the functions of a method according to an embodiment of the invention as described herein. The computer program product software may be loaded into a computer system using any appropriate means, including appropriate data storage reading means and/or via a network communications interface card. Software implementing control logic executed by a data processor causes the processor to perform the functions of an embodiment of the invention as described herein. The computer program product software may run as a standalone software application program running in an operating system. Alternatively, it may be integrated into an operating system of the computing platform.

Features implemented primarily in hardware may comprise, but are not limited to, hardware components such as application specific integrated circuits (ASICs), field programmable gateways (FPGAs) or one or more state machines, etc. Any appropriate implementation of the hardware state machine so as to perform the functions described herein may be used as is apparent to a person or persons skilled in the relevant art(s).

The embodiments and examples discussed herein are non-limiting. The embodiments of the invention described in detail herein above form exemplary embodiments only and it will be apparent to those skilled in the art that changes and modifications may be made without departing from the spirit and scope of the invention, for example, in its broader aspects. The embodiments of the invention as defined in the claims are intended to cover all such changes and modifications as fall within the true spirit of the invention.

## Claims

1. A method of monitoring roaming traffic in a communications system, the traffic originating from a plurality of devices roaming in a plurality of wireless local area networks, the method including:
receiving signalling traffic from said devices from a plurality of secure communications links, each secure communications link providing a virtual private network link from the wireless local area network to the secure communications link termination point;
duplicating one or more characteristics of the received signalling traffic to form a pair of duplicated versions of said received traffic;
forwarding a duplicated version of the signalling traffic to a monitoring point;
processing the forwarded traffic at the monitoring point to determine from one or more characteristics of the received traffic information enabling the identification of at least one roaming device and the location of a wireless network within which said roaming device is located;
wherein said signalling traffic is generated by a roaming device which has previously associated with one or more of said wireless local area networks.

2. A method as claimed in claim 1, wherein the signalling traffic is generated in response to said roaming device requesting an address in a said wireless local area network.

3. A method as claimed in claim 1 or 2, wherein the communications system further includes an address server arranged to allocate an address to a roaming device.

4. A method as claimed in any previous claim, wherein the signalling traffic comprises a request for an Internet Protocol address generated by the device.

5. A method as claimed in any previous claim, wherein said signalling traffic includes traffic addressed by a wireless access point to an authentication server arranged to inhibit the assignment of a private address to a roaming device by the wireless access point until the roaming device is authenticated at the authentication server.

6. A method as claimed in claim 5, wherein the signalling traffic includes a private internet protocol address allocated for the device by the wireless access point, wherein the allocated private address is not assigned to the device by the wireless access point until the device has been authenticated by the authentication server.

7. A method as claimed in any of claims 5 to 6, wherein the signalling traffic which includes said allocated private address comprises an XML message.

8. A method as claimed in any previous claim, wherein one or more of said characteristics comprises one or more of the following:
a device identifier for the roaming device or the WLAN access point;
a media access control address for the roaming device or the WLAN access point;
an internet protocol address for the roaming device or the WLAN access point;
a private IP address for the roaming device;
a NAT translated address for the roaming device or the WLAN access point;
a user identifier;
an identifier for the local area network within which the device is roaming;
an identifier for the wireless access point providing said local area network;

9. A method as claimed in any previous claim, further comprising:
processing intercepted traffic to determine the location of the geographic access point from which the roaming device traffic originates.

10. A method as claimed in any previous claim, wherein said roaming service enables said roaming device to access one or more of the following:
a portal application;
an intranet; and/or
the internet.

11. A wireless network access point arranged to participate in a method of monitoring roaming traffic as claimed in any of method claims 1 to 10, the access point being arranged to forward said signalling traffic to the secure communications link termination point, the access point comprising:
means to transmit beacon signals to a roaming device;
means to receive signalling traffic from a roaming device;
means to process said received signalling traffic to determine if said received signalling comprises traffic of a predetermined type;
means to establish a said secure communications link responsive to said processing determining said signalling traffic is traffic of a predetermined type;
means to transmit said signalling traffic of a predetermined type over said secure communications link.

12. A wireless network access point as claimed in claim 11, wherein said signalling traffic includes traffic generated by the roaming device requesting an address in the wireless network provided by said wireless network access point.

13. A network node arranged to participate in the method as claimed in any of claims 1 to 10, the network node comprising:
means arranged to process signalling traffic received from said plurality of secure communication links to generate a pair of duplicated versions of said received signalling traffic; and
means arranged to forward a duplicated version to said monitoring point.

14. A monitoring node arranged to participate in the method as claimed in any one of claims 1 to 10, the monitoring node being arranged to receive said duplicated version of said signalling traffic forwarded by said wireless network access point.

15. A monitoring system arranged to enable monitoring of traffic in a communications system, the traffic originating from a plurality of devices roaming in a plurality of wireless local area networks, the monitoring system including:
means arranged to receive signalling traffic from a plurality of secure tunnels, each tunnel associated with a wireless network access point;
means arranged to duplicate one or more characteristics of the received signalling traffic to form a pair of duplicated versions of said received traffic;
means arranged to forward a duplicated version to a monitoring means;
wherein said monitoring means is arranged to process received signalling traffic to determine from one or more characteristics of the received signalling traffic information enabling the identification of the device and the location of the wireless network access point,
wherein said signalling traffic is generated by a roaming device which has associated with one or more of said wireless local area networks.
